Europäisches Patentamt

European Patent Office

Office européen des brevets

(19)

(11) Publication number: **0 209 268**
A2

(12)

# EUROPEAN PATENT APPLICATION

(21) Application number: 86304856.7

(22) Date of filing: 24.06.86

(51) Int. Cl.⁴: **A 23 B 4/02**

(30) Priority: 12.07.85 GB 8517641

(43) Date of publication of application: 21.01.87
Bulletin 87/4

(84) Designated Contracting States: **BE DE FR GB IT NL**

(71) Applicant: **IMPERIAL CHEMICAL INDUSTRIES PLC, Imperial Chemical House Millbank, London SW1P 3JF (GB)**

(72) Inventor: **Ratter, Henry, 12 Pine Gardens, Upton Chester (GB)**

(74) Representative: **Walmsley, David Arthur Gregson et al, Imperial Chemical Industries PLC Legal department: Patents PO Box 6 Bessemer Road, Welwyn Garden City Hertfordshire AL7 1HD (GB)**

(54) Treatment of meat.

(57) A process of treating meat to improve the meat-binding properties and the water-binding properties of the meat which comprises contacting the meat with at least one alkali metal chloride and at least one additive selected from alkali metal bicarbonates, alkali metal carbonates, and alkali metal sesquicarbonates, preferably in the form of an aqueous solution.

EP 0 209 268 A2

QM.33570

## TREATMENT OF MEAT

This invention relates to the treatment of meat, in particular to the treatment of meat in order to improve the binding properties of the meat, and to improve the water-binding properties of the meat, that is to decrease the weight loss which occurs in cooking of the meat.

Various properties of meat may be enhanced by treating meat during, for example, the manufacture of meat products. Properties which are of importance to the manufacturer of meat products include the binding properties of the meat and the water-binding properties of the meat. Thus, it is of importance that the meat does not suffer a substantial weight loss on cooking due to loss of water. Such properties of meat are of course known to be improved by treating the meat with an aqueous solution of sodium chloride and furthermore, it is known to enhance the effect of sodium chloride by treating the meat with a combination of sodium chloride and phosphate salt, especially a polyphosphate salt.

The present invention relates to a process of treating meat in order to improve the binding properties of the meat and to improve the water binding properties of the meat. The process does not require the use of a phosphate yet it results in a substantial improvement in the meat-binding and the water-binding properties of the meat at least comparable to the effect produced by phosphate. However, the process may be effected in the presence of phosphate in which case the water-binding and meat-binding effects produced by the phosphate are enhanced.

According to the present invention there is provided a process of treating meat which process comprises contacting the meat with at least one alkali metal chloride and at least one additive selected from alkali metal bicarbonates, alkali metal carbonates, and alkali metal sesquicarbonates.

We are aware that it has been proposed to treat meat with an aqueous solution of sodium bicarbonate. For example, US patent 3 556 807 describes a process fo tenderising meat by soaking the meat in a solution of sodium bicarbonate. We are also aware that it has been proposed to treat meat with phosphates in conjunction with sodium bicarbonate, for example in European Patent Publication 0 028 113. We are not aware of prior art which describes treating meat with at least one alkali metal chloride and at least one additive selected from alkali metal bicarbonates, alkali metal carbonates, and alkali metal sesquicarbonates, for example with a solution of alkali metal chloride and such additive.

Contacting meat with alkali metal chloride leads to an improvement in the meat-binding and water-binding properties of the meat. The meat-binding and water-binding properties of the meat are improved to an even greater extent when meat is contacted not only with such a chloride but also with an additive selected from alkali metal bicarbonates, alkali metal carbonates, and alkali metal sesquicarbonates.

In this specification we will refer hereafter to the use of sodium chloride although it is to be understood that other alkali metal chlorides may be used. Similarly, we will refer hereafter to the use of sodium carbonate, sodium sesquicarbonate, and sodium bicarbonate although it is to be understood that other alkali metals carbonates, sesquicarbonates, and bicarbonates may be used.

The process of the invention may be effected by contacting the meat with sodium chloride and with at least one of the aforementioned additives in solid form, e.g. with a mixture of sodium chloride and at least one additive in solid form, or separately with sodium chloride in solid form and at least one additive in solid form. This manner of effecting the process of the invention is suitable for use with meat in comminuted forms, e.g. with sausage or hamburger meat. However, it is preferred that the meat is contacted with a solution or solutions of sodium chloride and at least one of the aforementioned additives in order that the sodium chloride and the additive may be more effectively distributed through the meat. This manner of effecting the process is particularly suitable for use with meat in bulk form. The solution is most suitably an aqueous solution. The process may be effected by contacting the meat separately with appropriate solutions, that is with a solution of sodium chloride and with a solution of at least one of the aforementioned additives. The order in which the meat is contacted with the solutions is not critical. It is preferred, however, that the meat be contacted with a solution which contains both sodium chloride and at least one of the aforementioned additives.

The invention will be described hereafter by reference to the use of a solution containing both sodium chloride and at least one of the aforementioned additives.

The concentration of sodium chloride in the solution may be that used conventionally in the art. However, the solution will generally contain at least 1% weight/volume of sodium chloride and, although a saturated solution may be used, the solution will generally contain not more than 25% weight/volume of sodium chloride.

In order that a reasonable enhancement may be obtained in the meat-binding and water-binding properties of the meat brought about by contacting the meat with sodium chloride it is preferred that the solution contains at least 0.1% weight/volume of at least one of the aforementioned additives. In general, the solution will contain not more than 5% weight/volume of at least one of the aforementioned additives.

In the process of the invention there is used a solution which contains at least one additive selected from sodium bicarbonate, sodium sesquicarbonate, and sodium carbonate. The solution may contain a single such additive or any combination of such additives. For example, sodium bicarbonate may be used alone, or sodium carbonate may be used alone, or sodium bicarbonate and sodium carbonate may be used in combination. In the solution the concentrations of sodium bicarbonate may be different from the concentration of sodium carbonate. However, the concentrations may be the same, and a particularly convenient way of achieving this identity in concentration, at least on a molar basis, is to use an aqueous solution of sodium sesquicarbonate, that is $Na_2CO_3$ $NaHCO_3$ $2H_2O$. Sodium sesquicarbonate is a readily available article of commerce, and it will generally be sufficient to dissolve it in water at a concentration in the range 0.1% to 5% weight/volume.

In general we find that the meat-binding and water-binding properties of the meat, particularly the latter properties of the meat, are improved to a greater extent by the use of sodium carbonate than by the use of sodium bicarbonate, and that a mixture of sodium bicarbonate and sodium carbonate, or sodium sesquicarbonate, is more effective than is sodium bicarbonate.

The process of the invention may be effected in the presence of a phosphate, for example, the phosphate may be present in a solution which also contains sodium chloride and at least one of the aforementioned additives, or a separate solution containing a phosphate may be used in the process. It is preferred to use an aqueous solution of at least one phosphate salt, particularly a salt of polyphosphate, as the use of such a solution produces a substantial enhancement in the meat-binding and water-binding properties of the meat. The concentration of the phosphate salt may, for example, be in the same range as that of the additive, that is in the range 0.1% to 5% weight/volume. Suitable phosphates for use in the process of the invention include alkali metal phosphates and alkali metal polyphosphates.

The process of the present invention is not limited in its application to any particular type of meat nor to meat in any particular form. Thus, it may be applied to beef, mutton or pork, e.g. lamb or bacon, chicken or turkey, and it may be applied to meat in bulk or to meat in a comminuted form. Indeed, it is particularly suitable for application to meat in a

-6-

comminuted form from which meat products such as sausages and hamburgers may be produced, as the structural integrity of the meat product during subsequent cooking is enhanced.

The process of treating the meat may be effected, for example, by soaking the meat with the solution or by injecting the solution into the meat, or by a combination of soaking and injecting. The meat can be soaked in the solution for a time sufficient for the meat to take up the desired amount of solution. A suitable time will depend on the dimensions of the meat, particularly its thickness, and on the type of meat, and for these reasons it is difficult to provide an estimate of a suitable time. However, the time of soaking will generally be from 10 minutes up to 24 hours. The uptake of solution by the meat will vary but in general, for both soaking and injecting, it will be in a range 5% to 30% weight/weight such that the meat contains, for example, 1% to 5% weight/weight of sodium chloride and 0.1% to 2% weight/weight of at least one of the aforementioned additives. These latter proportions of sodium chloride and of additive may also be incorporated into the meat by contacting the meat with sodium chloride and additive in solid form.

The proportions of sodium chloride and additive are for guidance only and the proportions incorporated into the meat will depend at least to some extent on the enhancement of the meat-binding and water-binding properties which are desired.

Where the process of the invention is effected by contacting the meat with a solution the temperature of the solution will generally be relatively low, for example a temperature above the freezing point of the solution and not greater than 20°C. A higher temperature may be used, but in general the temperature will be between 0°C and 10°C.

The invention is now illustrated by the following examples.

Examples 1 to 3

In separate examples samples of pork, chicken and beef in the form of 5g cubes were immersed separately in an aqueous solution for 18 hours at 2°C, the samples were removed from the solution and weighed and the uptake of the solution was determined. The samples were then cooked for 1 hour in a water bath at 75°C, cooled and reweighed and the cooked yeild determined. The cooked yield is defined as

$$\frac{\text{cooked weight} \times 100\%}{\text{initial weight}} \text{ (mean of 2 determinations).}$$

The results are given in Table 1.

Examples 4 to 12

In separate examples samples of pork, chicken and beef in the form of 5g cubes were immersed separately in aqueous solutions, weighed, cooked and reweighed following the procedure described in examples 1 to 3. The results are given in Table 2.

Examples 13 to 18

In separate examples samples of pork, chicken and beef in the forn of 5g cubes were immersed separately in aqueous solutions, weighed, cooked and reweighed following the procedure described in Examples 1 to 3. The results are given in Table 3.

Examples 19 to 36

In separate examples samples of pork in the form of 5g cubes were immersed separately in aqueous solutions, weighed, cooked and reweighed following the procedure described in Example 1.  The results are given in Tables 4 and 5.

TABLE 1

| Example | Aqueous solution | | | Cooked yield % | Meat |
|---|---|---|---|---|---|
| | NaCl weight/ Volume | Sodium Diphosphate weight/ Volume % | Sodium sesquicarbonate weight/ volume % | | |
| 1 | 4 | 0 | 1 | 89.1 | pork |
| Comparison | 4 | 1 | 0 | 82.0 | pork |
| Comparison | 4 | 0 | 0 | 66.3 | pork |
| 2 | 4 | 0 | 1 | 112.5 | chicken |
| Comparison | 4 | 1 | 0 | 99.3 | chicken |
| Comparison | 4 | 0 | 0 | 84.1 | chicken |
| 3 | 4 | 0 | 1 | 87.4 | beef |
| Comparison | 4 | 1 | 0 | 81.7 | beef |
| Comparison | 4 | 0 | 0 | 75.9 | beef |

## TABLE 2

| Example | Aqueous solution | | | cooked yield % | meat |
|---|---|---|---|---|---|
| | NaCl weight volume % | phosphate* weight/ volume % | sodium sesquicarbonate weight volume % | | |
| 4 | 4 | 0.5 | 0.1 | 81.6 | pork |
| 5 | 4 | 0.5 | 0.5 | 87.2 | pork |
| 6 | 4 | 0.5 | 1.0 | 92.0 | pork |
| Comparison | 4 | 1.0 | 0 | 79.5 | pork |
| 7 | 4 | 0.5 | 0.1 | 98.3 | chicken |
| 8 | 4 | 0.5 | 0.5 | 102.7 | chicken |
| 9 | 4 | 0.5 | 1.0 | 111.8 | chicken |
| Comparison | 4 | 1.0 | 0 | 95.7 | chicken |
| 10 | 4 | 0.5 | 0.1 | 82.2 | beef |
| 11 | 4 | 0.5 | 0.5 | 87.8 | beef |
| 12 | 4 | 0.5 | 1.0 | 93.4 | beef |
| Comparison | 4 | 0.5 | 0 | 89.3 | beef |

*   a mixture of sodium tripolyphosphate and sodium diphosphate.

TABLE 3

| Example | Aqueous Solution | | | Cooked yield % | Meat |
|---|---|---|---|---|---|
| | NaCl weight/ volume % | Phosphate* weight/ volume % | Sodium sesquicarbonate weight/ volume % | | |
| Comparison | 0 | 0 | 1 | 65.6 | pork |
| Comparison | 0 | 0.5 | 0.5 | 64.5 | pork |
| 13 | 4 | 0 | 0.1 | 70.6 | pork |
| 14 | 4 | 0 | 0.5 | 80.8 | pork |
| Comparison | 0 | 0 | 1 | 89.3 | chicken |
| Comparison | 0 | 0.5 | 0.5 | 88.0 | chicken |
| 15 | 4 | 0 | 0.1 | 95.0 | chicken |
| 16 | 4 | 0 | 0.5 | 98.2 | chicken |
| Comparison | 0 | 0 | 1 | 80.8 | beef |
| Comparison | 0 | 0.5 | 0.5 | 76.1 | beef |
| 17 | 4 | 0 | 0.1 | 86.9 | beef |
| 18 | 4 | 0 | 0.5 | 86.3 | beef |

* a mixture of sodium tripolyphosphate and sodium diphosphate.

## TABLE 4

| Example | Aqueous Solution | | | | | Cooked yield % |
|---------|------------------|---|---|---|---|---|
| | NaCl weight/ volume % | Phosphate* weight/ volume % | $NaHCO_3$ weight/ volume % | $Na_2CO_3$ weight/ volume % | $Na_2CO_3/Na_2CO_3$** weight volume % | |
| 19 | 4 | 0 | 0 | 1 | 0 | 106.5 |
| 20 | 4 | 0 | 0 | 0.5 | 0 | 99.3 |
| 21 | 4 | 0 | 1 | 0 | 0 | 96.8 |
| 22 | 4 | 0 | 0.5 | 0 | 0 | 87.1 |
| 23 | 4 | 0 | 0 | 0 | 1 | 103.1 |
| 24 | 4 | 0 | 0 | 0 | 0.5 | 95.8 |
| 25 | 4 | 0.5 | 0 | 0.5 | 0 | 98.8 |
| 26 | 4 | 0.5 | 0 | 0.1 | 0 | 85.1 |
| 27 | 4 | 0.1 | 0 | 0.1 | 0 | 80.0 |
| 28 | 4 | 0.1 | 0 | 0.5 | 0 | 98.9 |

\* A mixture of sodium tripolyphosphate and sodium diphosphate.
\*\* Blend of 53.9 weight % $Na_2CO_3$ and 46.1 weight % $NaHCO_3$.

## TABLE 5

| Example | Aqueous Solution | | | | | Cooked yield % |
|---|---|---|---|---|---|---|
| | NaCl weight/ volume % | Phosphate* weight/ volume % | $NaHCO_3$ weight/ volume % | $Na_2CO_3$ weight/ volume % | $NaHCO_3/Na_2CO_3$** weight volume % | |
| 29 | 4 | 0.5 | 0.5 | 0 | 0 | 93.2 |
| 30 | 4 | 0.5 | 0.1 | 0 | 0 | 85.0 |
| 31 | 4 | 0.1 | 0.1 | 0 | 0 | 75.7 |
| 32 | 4 | 0.1 | 0.5 | 0 | 0 | 90.3 |
| 33 | 4 | 0.5 | 0 | 0 | 0.5 | 97.0 |
| 34 | 4 | 0.5 | 0 | 0 | 0.1 | 87.0 |
| 35 | 4 | 0.1 | 0 | 0 | 0.1 | 80.0 |
| 36 | 4 | 0.1 | 0 | 0 | 0.5 | 95.8 |
| Comparison | 4 | 0 | 0 | 0 | 0 | 69.5 |
| Comparison | 4 | 1 | 0 | 0 | 0 | 81.9 |
| Comparison | 4 | 0.5 | 0 | 0 | 0 | 78.2 |

\* A mixture of sodium tripolyphosphate and sodium diphosphate.
\*\* Blend of 53.9 weight % $Na_2CO_3$ and 46.1 weight % $NaHCO_3$.

CLAIMS

1.      A process of treating meat which process comprises contacting the meat with at least one alkali metal chloride and at least one additive selected from alkali metal bicarbonates, alkali metal carbonates, and alkali metal sesquicarbonates.

2.      A process as claimed in Claim 1 in which meat is contacted with sodium chloride and at least one additive selected from sodium bicarbonate, sodium carbonate, and sodium sesquicarbonate.

3.      A process as claimed in Claim 1 or Claim 2 in which the alkali metal chloride and the additive are in solid form.

4.      A process as claimed in Claim 1 or Claim 2 in which the meat is contacted with an aqueous solution or solutions of alkali metal chloride and of at least one additive.

5.      A process as claimed in Claim 4 in which the aqueous solution contains alkali metal chloride and at least one additive.

6.      A process as claimed in Claim 4 or Claim 5 in which the aqueous solution contains 1% to 25% weight/volume of alkali metal chloride.

7.      A process as claimed in any one of Claims 4 to 6 in which the aqueous solution contains 0.1% to 5% weight/volume of at least one of the additives.

8.      A process as claimed in any one of Claims 1 to 7 in which the additive is alkali metal carbonate.

9.      A process as claimed in any one of Claims 1 to 7 in which the additive is alkali metal sesquicarbonate or a mixture of alkali metal carbonate and alkali metal bicarbonate.

10.    A process as claimed in any one of Claims 1 to 9 in which the meat is contacted with a phosphate.

11.    A process as claimed in Claim 10 in which the meat is contacted with an aqueous solution containing a phosphate.